# EUROPÄISCHE PATENTSCHRIFT

(11) **EP 1 987 920 B1**
(45) Veröffentlichungstag und Bekanntmachung des Hinweises auf die Patenterteilung: **10.01.2018**
(21) Anmeldenummer: 08007257.2
(22) Anmeldetag: 12.04.2008
(51) Int. Cl.: B24B 53/085, B24B 53/12, B23F 23/12

(54) **Schleifmaschine zum Schleifen eines Zahnrades**
Grinding machine for grinding a gear wheel
Meuleuse destinée à souder une roue dentée

(30) Priorität: 27.04.2007 DE 202007006219 U
(43) Veröffentlichungstag der Anmeldung: 05.11.2008
(73) Patentinhaber: Kapp GmbH, 96450 Coburg (DE)
(72) Erfinder: Schenk, Thomas, 96450 Coburg (DE)
(74) Vertreter: Gosdin, Michael

(56) Entgegenhaltungen:
- DE-A1- 19 706 867
- DE-U- 1 968 475
- US-B1- 6 234 880
- US-B1- 6 386 953

## Beschreibung

Die Erfindung betrifft eine Schleifmaschine zum Schleifen eines Zahnrades oder eines zahnradähnlichen Werkstücks, die aufweist: eine Schleifschnecke mit einem zahnförmigen Profil, die zumindest teilweise aus einem abrichtbaren Abrasivmaterial besteht und auf einer Schleifspindel drehbar angeordnet ist, so dass sie beim Schleifen um eine Drehachse rotieren kann, und ein Abrichtgerät, mit dem zumindest ein Teil der formgebenden Flächen der Schleifschnecke profiliert werden kann, wobei das Abrichtgerät eine Abrichtspindel aufweist, die ein scheibenförmiges Abrichtwerkzeug trägt, so dass es um eine Drehachse rotieren kann.

Eine gattungsgemäße Schleifmaschine offenbart die US 6 234 880 B1. Ähnliche Lösungen zeigen die DE 19 68 475 U**,** die US 6 386 953 B1 und die DE 197 06 867 A1**.**

Bei der Herstellung von Zahnrädern kommt dem abschließenden Bearbeitungsprozess eine wichtige Bedeutung zu. Bei diesem werden die Zahnflanken einer Schleifoperation unterzogen, mit der sie auf die genaue Kontur gebracht werden. Dabei sind oft über die Verzahnungsevolvente hinausgehende Korrekturen erwünscht, um das Betriebsverhalten der Verzahnung positiv zu beeinflussen.

Eine effiziente Verfahrensweise bei der Herstellung der Verzahnung ist das Wälzschleifen mit einer Schleifschnecke. Dabei steht das zu bearbeitende Zahnrad mit der Schleifschnecke im Eingriff, so dass durch das Abrasivmaterial der Schleifschnecke ein Aufmaß auf den Zahnflanken abgetragen werden kann.

Um eine hinreichende Qualität der Verzahnung zu erreichen, müssen die Arbeitsflächen der Schleifschnecke (d. h. das zahnförmige Profil der Schleifschnecke) nach einer gewissen Anzahl geschliffener Werkstücke erneut auf die gewünschte Form gebracht werden. Hierfür ist ein Abrichtvorgang erforderlich, für den ein Profilabrichtverfahren oder ein zeilenweises Abrichtverfahren eingesetzt werden kann. Beim Profilabrichten hat das Abrichtwerkzeug mit den Flanken des zahnförmigen Profils des Schleifwerkzeugs Linienkontakt, während beim zeilenweisen Abrichten ein punktförmiger Kontakt vorliegt.

Das für die Profilierung der Schleifschnecke vorgesehene Abrichtwerkzeug muss dabei nicht nur das zahnförmige Profil, also den Schneckengang, der Schleifschnecke profilieren. Es ist zumindest in gewissen zeitlichen Abständen auch erforderlich, die Außenumfangsfläche der Schleifschnecke, also ihre Hüllkurve, zu profilieren. Damit wird also der Zahnkopf der Schleifschnecke bzw. dessen Schleifprofil abgerichtet.

Zum Abrichten des Zahnkopfes kann grundsätzlich auch das scheibenförmige Abrichtwerkzeug eingesetzt werden. Allerdings gehen damit auch einige Nachteile einher.

Egal, ob das Abrichten der formgebenden Flächen der Schleifschnecke im Profilabrichtverfahren oder im Linienkontakt-Abrichtverfahren erfolgt, stellt das Abrichten des Zahnkopfes einen zusätzlichen Abrichtschritt dar, bei dem das scheibenförmige Werkzeug - jedenfalls bei einer zylindrischen Schleifschnecke - in Richtung der Drehachse der Schleifschnecke geführt wird, um die Hüllkurve der Schleifschnecke zu profilieren. Dies erfordert eine entsprechende Zeit, die zu Lasten der Wirtschaftlichkeit des Schleifverfahrens geht. Zudem ist ein scheibenförmiges Abrichtwerkzeug für das Profilieren der Hüllkurve der Schleifschnecke nicht optimal geeignet.

Der Erfindung liegt daher die Aufgabe zugrunde, eine Schleifmaschine der gattungsgemäßen Art so fortzubilden, dass das Abrichten einer Schleifschnecke schneller und dennoch exakt erfolgen kann, wobei angestrebt wird, einen möglichst hohen Grad an Flexibilität beim Abrichten zu erreichen.

Die Lösung dieser Aufgabe durch die Erfindung ist dadurch gekennzeichnet, dass die Schleifmaschine weiterhin eine Abrichtleiste umfasst, die eine Abrichtkante aufweist, deren Form der Soll-Hüllkurve der Schleifschnecke entspricht, wobei die Abrichtleiste eine Länge hat, die mindestens der Breite der Schleifschnecke entspricht.

Die Abrichtleiste ist dabei bevorzugt am Abrichtgerät befestigt. Dies ist jedoch nicht zwingend. Sie kann irgendwo im Maschinenraum montiert sein, wenn dort das Eintauchen in die Schnecke möglich ist.

Durch die erfindungsgemäße Ausgestaltung kann durch einmaliges Eintauchen der Abrichtleiste mit einem einzigen Prozessschritt und damit in sehr kurzer Zeit der gesamte Kopfbereich der Schleifschnecke abgerichtet werden.

Die Abrichtleiste kann dabei eine gerade Abrichtkante aufweisen, was sich im Falle einer zylindrischen Schleifschnecke empfiehlt. Es ist grundsätzlich aber auch möglich, dass die Abrichtleiste eine bogenförmige Abrichtkante aufweist; dies bietet sich bei Globoidschnecken an.

Das Abrichtgerät und/oder die Schleifspindel können auf einem Schlitten angeordnet sein, der ein Heranfahren der Abrichtkante an die Außenumfangsfläche der Schleifschnecke ermöglicht. Der Schlitten kann dabei ein Heranfahren der Abrichtkante ermöglichen, bei der diese in Richtung der Drehachse der Schleifspindel weist, d. h. die Abrichtkante liegt parallel zur Drehachse der Schleifschnecke.

Die Abrichtleiste hat im Querschnitt bevorzugt eine rechteckige Form. Das Abrichtgerät kann in einem stirnseitigen Bereich zwei Anlageflächen für die Abrichtleiste aufweisen. Es kann weiterhin eine Klemmvorrichtung zum Klemmen der Abrichtleiste aufweisen.

Die Abrichtleiste besteht bevorzugt aus polykristallinem Diamant (PKD).

Das scheibenförmige Abrichtwerkzeug kann eine Profilierung aufweisen, so dass beim Abrichten der formgebenden Flächen der Schleifschnecke eine im Wesentlichen punktförmige Berührung zwischen Abrichtwerkzeug und Schleifschnecke vorliegt.

Die Erfindung schlägt also zusätzlich zum scheibenförmigen Abrichtwerkzeug eine Abrichtleiste vor, mit der der Kopfbereich des zahnförmigen Profils der Schleifschnecke abgerichtet wird.

Dies nimmt nur einen Bruchteil der Zeit in Anspruch, die ein topologisches Abrichtwerkzeug benötigen würde, um den Kopf des Profils abzurichten.

Das Schleifwerkzeug ist bevorzugt eine ein- oder mehrgängige Schleifschnecke für das Schleifen eines Zahnrades im Wälzschleifverfahren. Mit der vorgeschlagenen Schleifmaschine wird es möglich, den Abrichtvorgang in wesentlich kürzerer Zeit mit derselben Qualität durchzuführen, da der gesamte Kopf des zahnförmigen Profils der Schleifschnecke mittels der Abrichtleiste bzw. des Abrichtlineals durch einmaliges Eintauchen in Richtung radial auf die Schleifschnecke zu in sehr kurzer Zeit profiliert werden kann. Die Wirtschaftlichkeit des Schleifens wird dadurch wesentlich erhöht.

In der Zeichnung ist ein Ausführungsbeispiel der Erfindung dargestellt. Es zeigen:
- Fig. 1: einen Axialschnitt durch eine Schleifschnecke während des Abrichtens ihres zahnförmigen Profils mit einem scheibenförmigen Abrichtwerkzeug,
- Fig. 2: den Axialschnitt durch die Schleifschnecke während des Abrichtens des Kopfes des zahnförmigen Profils der Schleifschnecke mittels einer Abrichtleiste,
- Fig. 3: in perspektivischer Darstellung ein Abrichtgerät zum Abrichten sowohl des zahnförmigen Profils als auch des Kopfes der Schleifschnecke und
- Fig. 4: einen Schnitt durch das Abrichtgerät gemäß Fig. 3, wobei die Schnittebene senkrecht auf der Drehachse der Abrichtspindel steht.

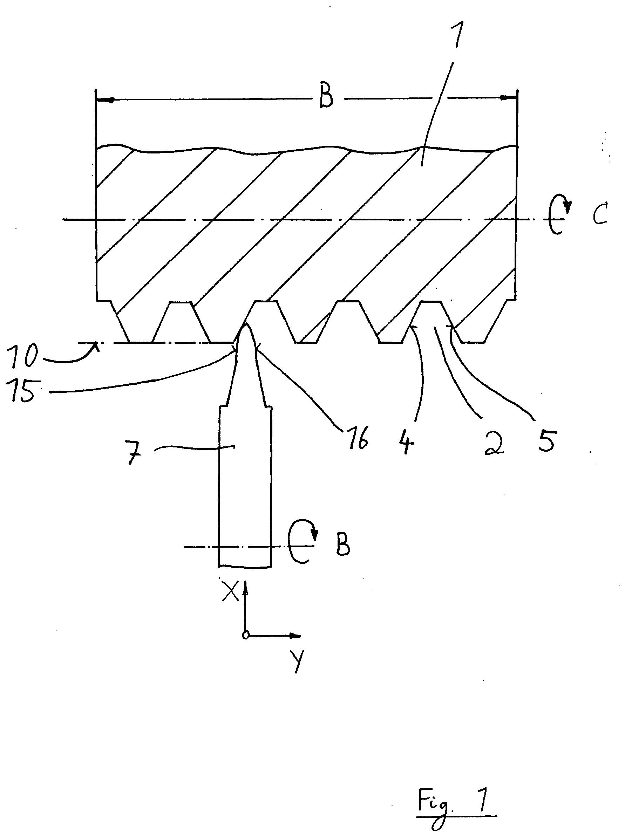

In Fig. 1 ist das an sich bekannte zeilenweise Abrichten eines Schleifwerkzeugs 1 in Form einer Schleifschnecke zu sehen. Die Schleifschnecke 1 hat im Axialschnitt ein zahnförmiges Profil 2, das von zwei Flanken 4 und 5 definiert bzw. begrenzt wird, die die formgebenden Flächen beim Schleifen bilden. Die erste Flanke 4 und genauso die zweite Flanke 5 haben im Axialschnitt eine weitgehend lineare Form, allerdings sind dem weitgehend linearen Verlauf Korrekturen überlagert, um beim fertig geschliffenen Zahnrad ein entsprechendes Gegenprofil zu erhalten. Die beiden Flanken 4 und 5 liegen sich - wie ersichtlich - gegenüber.

Damit das zahnförmige Profil 2 die gewünschte präzise Form aufweist, ist ein Abrichtvorgang erforderlich, für den ein scheibenförmiges Abrichtwerkzeug 7 vorgesehen ist. Das Abrichtwerkzeug 7 hat im Axialschnitt die in Fig. 1 skizzierte Form, d. h. eine erste Abrasivfläche 15 und eine zweite Abrasivfläche 16, die zum Zusammenwirken mit der ersten Flanke 4 bzw. mit der zweiten Flanke 5 vorgesehen sind.

Beim Abrichten rotiert die Schleifschnecke 1 um die Drehachse C und das rotationssymmetrische Abrichtwerkzeug 7 um die Drehachse B. Bei vorliegender Rotation um die Drehachsen B, C wird dann der mit den Abrasivflächen 15, 16 versehene Arbeitsbereich des Abrichtwerkzeugs 7 in den Schneckengang der Schleifschnecke 1 "eingefädelt", d. h. in Abhängigkeit der Schneckensteigung und der Drehzahl der Schleifschnecke 1 wird das Abrichtwerkzeug 7 in Achsrichtung Y vorgeschoben. Dabei wird zeilenweise zunächst die erste Flanke 4 und dann die zweite Flanke 5 profiliert. D. h. dass nach jeweiligen axialen Durchläufen das Abrichtwerkzeug 7 relativ zur Schleifschnecke 1 radial in Richtung der Zustellkoordinate X zugestellt wird, bis das zahnförmige Profil 2 über die gesamte Höhe abgerichtet ist.

Während der Kopf des zahnförmigen Profils 2, d. h. die Außenumfangsfläche 10 der Schleifschnecke 1 grundsätzlich auch mittels des scheibenförmigen Abrichtwerkzeugs 7 abgerichtet werden könnte, sieht die Erfindung eine andere Lösung vor.

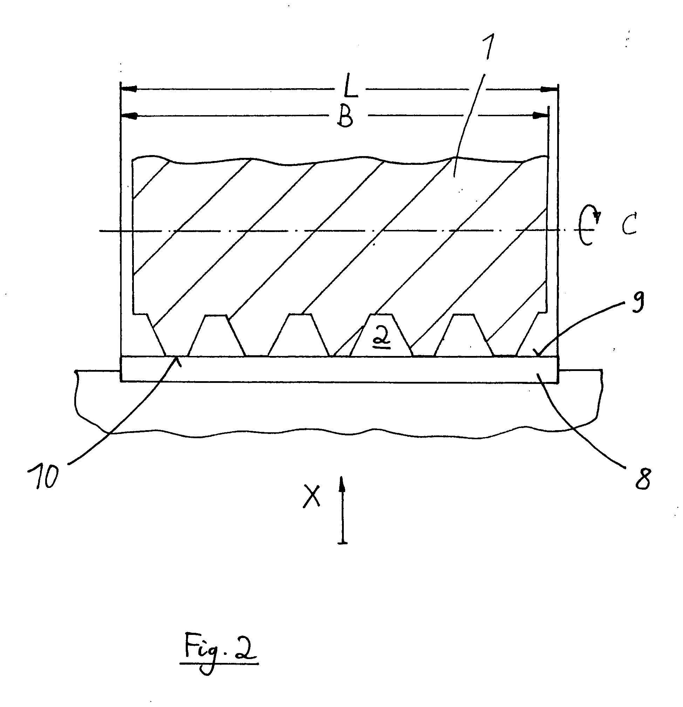

Wie in Fig. 2 gesehen werden kann, erfolgt das Abrichten der Außenumfangsfläche 10, d. h. der Hüllfläche der Schleifschnecke 1, mittels einer Abrichtleiste 8, die eine Abrichtkante 9 aufweist. Die Abrichtkante 9 ist vorliegend - entsprechend der zylindrischen Form der Schleifschnecke 1 - gerade ausgebildet. Bei Globoidschnecken käme grundsätzlich auch eine bogenförmige Ausgestaltung der Abrichtkante 9 in Betracht. Das Abrichten des Zahnkopfes erfolgt durch Zustellen der Abrichtleiste 8 in Richtung X um einen vorgegebenen Betrag, so dass mit einen einzigen Prozessschritt der Kopf der gesamten Schleifschnecke 1 abgerichtet wird.

Um dies zu ermöglichen, ist die Länge L der Abrichtleiste 8 mindestens so groß wie die Breite B der Schleifschnecke 1, d. h. die Abrichtleiste 8 deckt die gesamte Schneckenbreite ab.

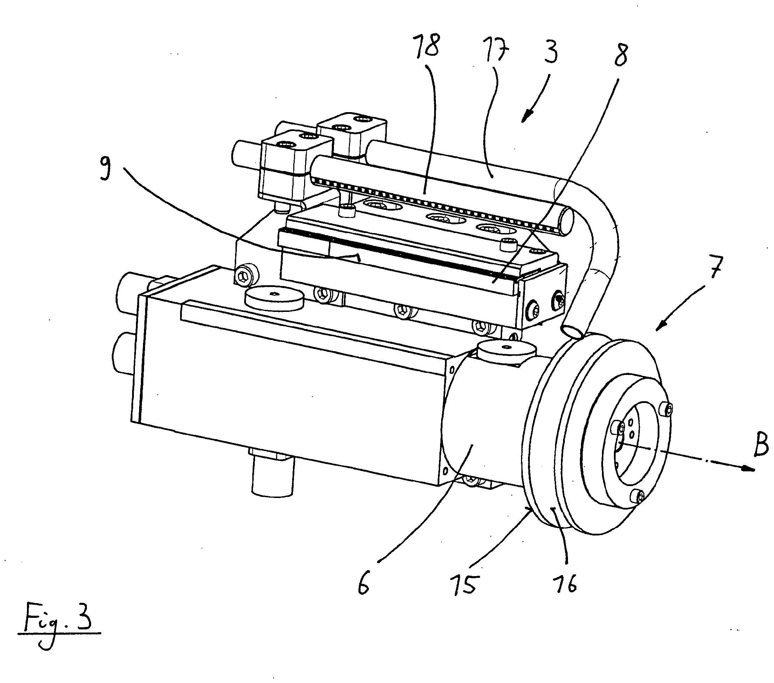

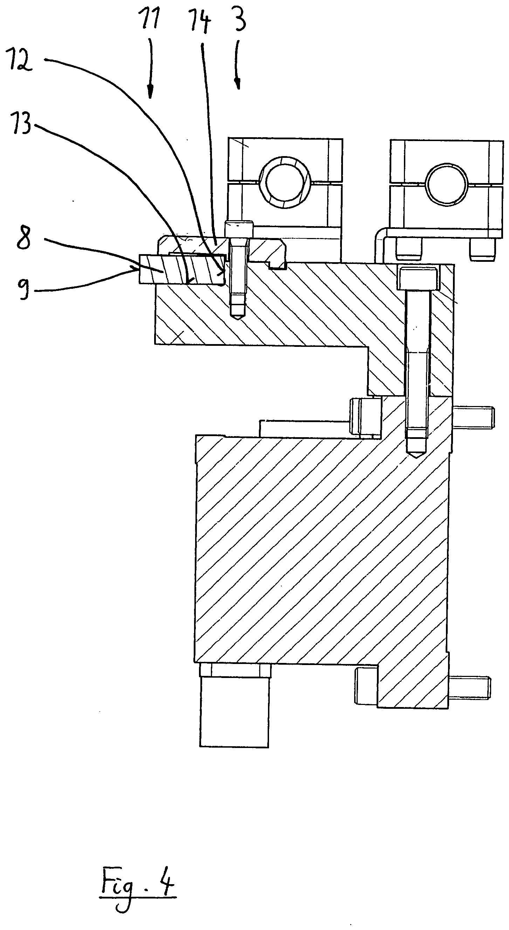

Details der apparativen Ausführung gehen aus den Figuren 3 und 4 hervor.

Das in den beiden Figuren 3 und 4 dargestellte Abrichtgerät 3 ist in die Schleifmaschine eingebaut, und zwar auf einem Schlitten montiert, so dass es in die genannten Richtungen X und Y relativ zur Schleifschnecke 1 verfahren werden kann. Alternativ oder additiv ist aber auch möglich, dass die Schleifschnecke auf einem Schlitten angeordnet ist. Entscheidend ist die Möglichkeit einer relativen translatorischen Bewegung zwischen Schleifschnecke und Abrichtwerkzeugen.

Zum Abrichten des zahnförmigen Profils 2 der Schleifschnecke 1 weist das Abrichtgerät 3 eine Abrichtspindel 6 auf, die das scheibenförmige Abrichtwerkzeug 7 trägt, wobei dieses beim Abrichten um die Achse B drehen kann. In Fig. 3 ist ein Abrichtwerkzeug 7 skizziert, das zwei benachbart angeordnete Abrichtscheiben aufweist (im Unterschied zur schematischen Darstellung gemäß Fig. 1).

Neben der Abrichtspindel 6 mit dem scheibenförmigen Abrichtwerkzeug 7 weist das Abrichtgerät 3 weiterhin die Abrichtleiste 8 auf, die die Abrichtkante 9 hat. Wie am besten in Fig. 4 zu sehen ist, ist in einem stirnseitigem Bereich 11 des Abrichtgeräts 3 die Abrichtleiste 8 angeordnet. Gehalten wird diese durch eine Klemmvorrichtung 14, die die Abrichtleiste 8 klemmt, nachdem sie an zwei Anlageflächen 12 und 13 am Abrichtgerät angelegt und dort ausgerichtet worden ist.

Beim Abrichten des Kopfbereichs des zahnförmigen Profils 2 mittels des Abrichtlineals 8 wird also die mit der geraden Abrichtkante 9 ausgestattete Abrichtleiste 8 durch Eintauchen der Leiste senkrecht zur Achse des Schleifwerkzeugs 1 in einem Prozessschritt im Kopfbereich komplett abgerichtet, wobei die Abrichtleiste 8 bzw. die Abrichtkante 9 parallel zur Achse C bleibt.

Die Abrichtleiste 8 besteht dabei bevorzugt aus polykristallinem Diamant (PDK). Die ist eine synthetisch hergestellte, extrem zähe, untereinander verwachsene Masse von Diamantpartikeln mit Zufallorientierung in einer Metallmatrix. Es wird durch Zusammensintern von ausgewählten Diamantpartikeln bei hohem Druck und hohen Temperaturen hergestellt. Der Sinterprozess wird innerhalb des stabilen Bereichs von Diamant kontrolliert, wobei eine extrem harte und verschleißfeste Struktur entsteht.

Die Zufuhr von Kühlschmierstoff beim Abrichten erfolgt über die Kühlmitteldüse 17 für das Abrichtwerkzeug 7 und über die Kühlmitteldüse 18 für die Abrichtleiste 8.

### Bezugszeichenliste;

- 1: Schleifschnecke
- 2: zahnförmiges Profil
- 3: Abrichtgerät
- 4: formgebende Fläche (Flanke des zahnförmigen Profils)
- 5: formgebende Fläche (Flanke des zahnförmigen Profils)
- 6: Abrichtspindel
- 7: scheibenförmiges Abrichtwerkzeug
- 8: Abrichtleiste / Abrichtlineal
- 9: Abrichtkante
- 10: Außenumfangsfläche der Schleifschnecke (Kopfbereich)
- 11: stirnseitiger Bereich
- 12: Anlagefläche
- 13: Anlagefläche
- 14: Klemmvorrichtung
- 15: erste Abrasivfläche des scheibenförmigen Abrichtwerkzeugs
- 16: zweite Abrasivfläche des scheibenförmigen Abrichtwerkzeugs
- 17: Kühlmitteldüse
- 18: Kühlmitteldüse

- C: Drehachse des Schleifwerkzeugs
- B: Drehachse des Abrichtwerkzeugs
- L: Länge der Abrichtleiste
- B: Breite der Schleifschnecke
- X: radiale Zustellkoordinate (Höhenrichtung des Profils)
- Y: axiale Zustellkoordinate

## Patentansprüche

1. Schleifmaschine zum Schleifen eines Zahnrades oder eines zahnradähnlichen Werkstücks, die aufweist:
eine Schleifschnecke (1) mit einem zahnförmigen Profil (2), die zumindest teilweise aus einem abrichtbaren Abrasivmaterial besteht und auf einer Schleifspindel drehbar angeordnet ist, so dass sie beim Schleifen um eine Drehachse (C) rotieren kann, und
ein Abrichtgerät (3), mit dem zumindest ein Teil der formgebenden Flächen (4, 5) der Schleifschnecke (1) profiliert werden kann,
wobei das Abrichtgerät (3) eine Abrichtspindel (6) aufweist, die ein scheibenförmiges Abrichtwerkzeug (7) trägt, so dass es um eine Drehachse (B) rotieren kann,
**dadurch gekennzeichnet,**
**dass** die Schleifmaschine weiterhin eine Abrichtleiste (8) umfasst, die eine Abrichtkante (9) aufweist, deren Form der Soll-Hüllkurve der Schleifschnecke (1) entspricht, wobei die Abrichtleiste (8) eine Länge (L) hat, die mindestens der Breite (B) der Schleifschnecke (1) entspricht.

2. Schleifmaschine nach Anspruch 1, **dadurch gekennzeichnet, dass** die Abrichtleiste (8) am Abrichtgerät (3) angeordnet ist.

3. Schleifmaschine nach einem der Ansprüche 1 oder 2, **dadurch gekennzeichnet, dass** die Abrichtleiste (8) eine gerade Abrichtkante (9) aufweist.

4. Schleifmaschine nach einem der Ansprüche 1 oder 2, **dadurch gekennzeichnet, dass** die Abrichtleiste (8) eine bogenförmige Abrichtkante (9) aufweist.

5. Schleifmaschine nach einem der Ansprüche 1 bis 4, **dadurch gekennzeichnet, dass** das Abrichtgerät (3) und/oder die Schleifspindel auf einem Schlitten angeordnet ist, die ein Heranfahren der Abrichtkante (9) an die Außenumfangsfläche (10) der Schleifschnecke (1) ermöglicht.

6. Schleifmaschine nach Anspruch 5, **dadurch gekennzeichnet, dass** der Schlitten ein Heranfahren der Abrichtkante (9) ermöglicht, bei der diese parallel zur Drehachse (C) der Schleifspindel liegt.

7. Schleifmaschine nach einem der Ansprüche 1 bis 6, **dadurch gekennzeichnet, dass** die Abrichtleiste (8) im Querschnitt eine rechteckige Form aufweist.

8. Schleifmaschine nach einem der Ansprüche 1 bis 7, **dadurch gekennzeichnet, dass** das Abrichtgerät (3) in einem stirnseitigen Bereich (11) mindestens zwei Anlageflächen (12, 13) für die Abrichtleiste (8) aufweist.

9. Schleifmaschine nach Anspruch 8, **dadurch gekennzeichnet, dass** das Abrichtgerät (3) eine Klemmvorrichtung (14) zum Klemmen der Abrichtleiste (8) aufweist.

10. Schleifmaschine nach einem der Ansprüche 1 bis 9, **dadurch gekennzeichnet, dass** die Abrichtleiste (8) aus polykristallinem Diamant (PKD) besteht.

11. Schleifmaschine nach einem der Ansprüche 1 bis 10, **dadurch gekennzeichnet, dass** die Schleifschnecke (1) eingängig ausgebildet ist.

12. Schleifmaschine nach einem der Ansprüche 1 bis 10, **dadurch gekennzeichnet, dass** die Schleifschnecke (1) mehrgängig ausgebildet ist.

13. Schleifmaschine nach einem der Ansprüche 1 bis 12, **dadurch gekennzeichnet, dass** das scheibenförmige Abrichtwerkzeug (7) eine Profilierung aufweist, so dass beim Abrichten der formgebenden Flächen (4, 5) der Schleifschnecke (1) eine im Wesentlichen punktförmige Berührung zwischen Abrichtwerkzeug (7) und Schleifschnecke (1) vorliegt.

14. Schleifmaschine nach einem der Ansprüche 1 bis 12, **dadurch gekennzeichnet, dass** das scheibenförmige Abrichtwerkzeug (7) eine Profilierung aufweist, so dass beim Abrichten der formgebenden Flächen (4, 5) der Schleifschnecke (1) eine im linienförmige Berührung zwischen Abrichtwerkzeug (7) und Schleifschnecke (1) vorliegt.

## Claims

1. Grinding machine for grinding of a gear or of a gear-like workpiece, which has:
a grinding worm (1) with a tooth-shaped profile (2), which consists at least partly from a dressable abrasive material and which is arranged rotatably on a grinding spindle, so that it can rotate around an axis of rotation (C) during grinding and
a dressing device (3), with which at least a part of the forming areas (4, 5) of the grinding worm (1) can be profiled,
wherein the dressing device (3) has a dressing spindle (6), which bears a disk-shaped dressing tool (7), so that it can rotate around an axis of rotation (B),
**characterized in that**
the grinding machine further has a dressing bar (8), which has a dressing edge (9), which form corresponds to the ideal envelope of the grinding worm (1), wherein the dressing bar (8) has a length (L) which is at least the width (B) of the grinding worm (1).

2. Grinding machine according to claim 1, **characterized in that** the dressing bar (8) is arranged at the dressing device (3).

3. Grinding machine according to one of claims 1 or 2, **characterized in that** the dressing bar (8) has a straight dressing edge (9).

4. Grinding machine according to one of claims 1 or 2, **characterized in that** the dressing bar (8) has an arcuated dressing edge (9).

5. Grinding machine according to one of claims 1 till 4, **characterized in that** the dressing device (3) and/or the grinding spindle are arranged on a slide, which allows to move the dressing edge (9) to the outer circumferential area (10) of the grinding worm (1).

6. Grinding machine according to claim 5, **characterized in that** the slide allows to move the dressing edge (9), wherein the dressing edge (9) is arranged parallel to the axis of rotation (C) of the grinding spindle.

7. Grinding machine according to one of claims 1 till 6, **characterized in that** the dressing bar (8) has a rectangular shape in its cross section.

8. Grinding machine according to one of claims 1 till 7, **characterized in that** the dressing device (3) has at least two contact surfaces (12, 13) for the dressing bar (8) in a face side region (11).

9. Grinding machine according to claim 8, **characterized in that** the dressing device (3) has a clamping device (14) for clamping of the dressing bar (8).

10. Grinding machine according to one of claims 1 till 9, **characterized in that** the dressing bar (8) consists of poly-crystalline diamond (PKD).

11. Grinding machine according to one of claims 1 till 10, **characterized in that** the grinding worm (1) is a single-thread grinding worm.

12. Grinding machine according to one of claims 1 till 10, **characterized in that** the grinding worm (1) is a multiple-thread grinding worm.

13. Grinding machine according to one of claims 1 till 12, **characterized in that** the disk-shaped dressing tool (7) has such a profile, so that during the dressing of the forming areas (4, 5) of the grinding worm (1) a substantial punctual contact is given between the dressing tool (7) and the grinding worm (1).

14. Grinding machine according to one of claims 1 till 12, **characterized in that** the disk-shaped dressing tool (7) has such a profile, so that during the dressing of the forming areas (4, 5) of the grinding worm (1) a line contact is given between the dressing tool (7) and the grinding worm (1).

## Revendications

1. Meuleuse destinée à meuler une roue dentée ou une pièce similaire à une roue dentée, présentant :
une vis sans fin de meulage (1) avec un profil en forme de dent (2), qui se compose au moins en partie d'un matériau abrasif pouvant être dressé et qui est disposée de manière rotative sur une broche porte-meule de telle sorte qu'elle puisse tourner autour d'un axe de rotation (C) lors du meulage, et
un appareil de dressage (3) avec lequel au moins une partie des surfaces de façonnage (4, 5) de la vis sans fin de meulage (1) peut être profilée,
l'appareil de dressage (3) présentant une broche de dressage (6) qui porte un outil de dressage en forme de disque (7) de telle sorte qu'il puisse tourner autour d'un axe de rotation (B),
**caractérisée en ce que**
la meuleuse comprend en outre une baguette de meulage (8) qui présente une arête de dressage (9) dont la forme correspond à la courbe d'enveloppe de consigne de la vis sans fin de meulage (1), la baguette de dressage (8) présentant une longueur (L) qui correspond au moins à la largeur (B) de la vis sans fin de meulage (1).

2. Meuleuse selon la revendication 1, **caractérisée en ce que** la baguette de dressage (8) est disposée sur l'appareil de dressage (3).

3. Meuleuse selon l'une quelconque des revendications 1 ou 2, **caractérisée en ce que** la bague de dressage (8) présente une arête de dressage droite (9).

4. Meuleuse selon l'une quelconque des revendications 1 ou 2, **caractérisée en ce que** la baguette de dressage (8) présente une arête de dressage de forme courbe (9).

5. Meuleuse selon l'une quelconque des revendications 1 à 4, **caractérisée en ce que** l'appareil de dressage (3) et/ou la broche porte-meule sont disposés sur un chariot qui permet une avancée de l'arête de dressage (9) vers la surface périphérique extérieure (10) de la vis sans fin de meulage (1).

6. Meuleuse selon la revendication 5, **caractérisée en ce que** le chariot permet une avancée de l'arête de dressage (9) à laquelle celle-ci est située parallèlement à l'axe de rotation (C) de la broche porte-meule.

7. Meuleuse selon l'une quelconque des revendications 1 à 6, **caractérisée en ce que** la baguette de dressage (8) présente en section transversale une forme rectangulaire.

8. Meuleuse selon l'une quelconque des revendications 1 à 7, **caractérisée en ce que** l'appareil de dressage (3) présente, dans une région frontale (11), au moins deux surfaces d'appui (12, 13) pour la baguette de dressage (8).

9. Meuleuse selon la revendication 8, **caractérisée en ce que** l'appareil de dressage (3) présente un dispositif de serrage (14) pour serrer la baguette de dressage (8).

10. Meuleuse selon l'une quelconque des revendications 1 à 9, **caractérisée en ce que** la baguette de dressage (8) se compose de diamant polycristallin (PKD).

11. Meuleuse selon l'une quelconque des revendications 1 à 10, **caractérisée en ce que** la vis sans fin de meulage (1) est réalisée à pas unique.

12. Meuleuse selon l'une quelconque des revendications 1 à 10, **caractérisée en ce que** la vis sans fin de meulage (1) est réalisée à plusieurs pas.

13. Meuleuse selon l'une quelconque des revendications 1 à 12, **caractérisée en ce que** l'outil de dressage en forme de disque (7) présente un profilage de telle sorte que lors du dressage des surfaces de façonnage (4, 5) de la vis sans fin de meulage (1), on obtienne un contact essentiellement ponctuel entre l'outil de dressage (7) et la vis sans fin de meulage (1).

14. Meuleuse selon l'une quelconque des revendications 1 à 12, **caractérisée en ce que** l'outil de dressage en forme de disque (7) présente un profilage de telle sorte que lors du dressage des surfaces de façonnage (4, 5) de la vis sans fin de meulage (1), on obtienne un contact linéaire entre l'outil de dressage (7) et la vis sans fin de meulage (1).
